# EUROPÄISCHE PATENTSCHRIFT

(11) **EP 3 504 051 B1**
(45) Veröffentlichungstag und Bekanntmachung des Hinweises auf die Patenterteilung: **07.10.2020**
(21) Anmeldenummer: 17748498.7
(22) Anmeldetag: 04.08.2017
(51) Int. Cl.: B29C 70/06, B29B 15/12, C08J 5/24, B05C 1/08, D06B 21/02, D06B 3/10

(54) **VORRICHTUNG UND VERFAHREN ZUR IMPRÄGNIERUNG VON FASERSTRUKTUREN**
DEVICE AND METHOD FOR IMPREGNATING OF FIBROUS STRUCTURES
DISPOSITIF ET PROCEDE D'IMPREGNATION DE STRUCTURES EN FIBRES

(30) Priorität: 24.08.2016 EP 16185545
(43) Veröffentlichungstag der Anmeldung: 03.07.2019
(73) Patentinhaber: BASF SE, 67056 Ludwigshafen am Rhein (DE)
(72) Erfinder: MEYER, Andre, 49448 Lemfoerde (DE); HASENPATT, Michael, 49448 Lemfoerde (DE)
(86) Internationale Anmeldenummer: PCT/EP2017/069829
(87) Internationale Veröffentlichungsnummer: WO 2018/036790

(56) Entgegenhaltungen:
- WO-A1-03/020657
- GB-A- 291 485
- US-A- 2 969 579
- US-A- 3 769 126
- US-A- 3 849 154
- US-A- 4 737 383
- US-A1- 2012 156 378

## Beschreibung

Die Erfindung geht aus von einer Vorrichtung zur Imprägnierung von Faserstrukturen mit einem Matrixmaterial umfassend ein Unterteil mit einem Bad zur Aufnahme des Matrixmaterials und einer Abtropfeinheit.

Durch die Imprägnierung von Faserstrukturen werden Faserbundmaterialien hergestellt. In einem Bad imprägnierte Faserstrukturen, insbesondere Endlosfasern, können eingesetzt werden, um Bauteile im Nasswickelverfahren, beispielsweise Rohre, Masten oder Tanks, herzustellen. Eine solche Vorrichtung erlaubt ein kontinuierliches Imprägnieren der Faserstruktur, die dann nach dem Tränken unmittelbar weiterverarbeitet werden kann. Üblicherweise wird bei den Nasswickelverfahren die getränkte Faserstruktur zum Endprodukt gewickelt, bevor das Matrixmaterial ausgehärtet oder erstarrt ist. Nach dem Wickeln erfolgt dann das Aushärten oder Erstarren des Matrixmaterials zum fertigen Endprodukt.

Um Faserstrukturen, insbesondere Endlosfasern, zu tränken, sind unterschiedliche Verfahren bekannt, wobei in der Regel ein Bad eingesetzt wird, durch das die Fasern geführt werden.

So ist zum Beispiel aus der US 2,433,965 bekannt, Endlosfasern durch ein Bad zu leiten, indem die Fasern von oben in das Bad eintauchen und um Rollen innerhalb des Bades geführt werden. Nach dem Verlassen des Bades werden die so getränkten Fasern durch ein Walzenpaar geführt, in dem überschüssiges Matrixmaterial ausgepresst wird. Hierzu befinden sich die Walzenpaare oberhalb der Badoberfläche, damit das abgeschiedene Matrixmaterial zurück in das Bad fließt.

Eine Vorrichtung zur Herstellung eines gewickelten Produkts ist aus US 4,267,007 bekannt. Hier werden die Fasern vor dem Wickelprozess ebenfalls in einem Bad mit dem Matrixmaterial getränkt. Hierzu werden die Fasern um eine Rolle innerhalb des Bades geleitet. Danach werden die getränkten Fasern über eine Platte geleitet und mit einem Block auf die Platte gedrückt, um überschüssiges Matrixmaterial auszupressen.

Eine weitere Vorrichtung zur Imprägnierung von Endlosfasern ist aus US20120156378 bekannt.

Alle Verfahren, bei denen die Faserstruktur durch ein Bad geleitet wird, haben jedoch den Nachteil, dass aufgrund des üblicherweise offenen Bades die Viskosität des Matrixmaterials mit der Zeit ändert, entweder aufgrund von Verdunstung oder in Abhängigkeit vom eingesetzten Matrixmaterial auch durch chemische Reaktion aufgrund des Kontaktes mit Luftfeuchtigkeit. Zudem ist es bei jedem Anfahren, zum Beispiel nach einer Reinigung, notwendig, die Fasern wieder mühsam einzufädeln. Die Befüllung des Bades kann erst erfolgen, wenn die Fasern bereits eingelegt worden sind.

Um insbesondere zu vermeiden, dass sich die Viskosität des Matrixmaterials ändert, sind Verfahren und Vorrichtungen bekannt, bei denen die Fasern durch einen Spalt geführt werden, in dem die Imprägnierung erfolgt. Eine solche Vorrichtung ist zum Beispiel aus US 4,937,028, US 5,766,357 oder aus WO-A 2007/062516 sowie aus A. Miaris et al., "Modeling the Impregnation Process of a Siphon Impregnation System during Filament Winding", Proceedings of the ASME 2011 Pressure Vessels and Piping Division Conference, PVP2011, July 2011, bekannt. Diese Verfahren haben jedoch insbesondere den Nachteil, dass aufgrund der geringen Größe der Imprägniereinrichtung das Matrixmaterial kontinuierlich und sehr präzise nachgeführt werden muss, um eine gleichmäßige Imprägnierung zu erhalten.

Aus US 5,747,075 ist ein Pultrusionsverfahren bekannt, bei dem die Fasern durch Kanäle geführt werden, in die über einen Verteiler Matrixmaterial zum Tränken eingepumpt wird.

US 5.084,305 beschreibt ein Tränkungsverfahren, bei dem die Fasern über Stege geführt werden, in denen jeweils Düsen ausgebildet sind, durch die das Matrixmaterial auf die Fasern appliziert wird. Eine gleichmäßige Imprägnierung wird bei diesem System erreicht, indem die Fasern einmal über einen Steg und einmal unter einem Steg entlanggeführt werden.

Auch bei diesen Verfahren ist eine kontinuierliche und insbesondere gleichmäßige Zufuhr des Matrixmaterials erforderlich, um gleichmäßig imprägnierte Fasern zu erhalten.

Eine weitere Möglichkeit zur Imprägnierung von Fasern ist aus US 7,413,623 bekannt. Hier werden die Fasern um mehrere Walzen geführt und die Zugabe des Matrixmaterials erfolgt aus einem Vorratsbehälter, der oberhalb der Walzen angeordnet ist und aus dem das Matrixmaterial einem Walzenspalt zugeführt wird, durch den sich die Fasern von oben nach unten bewegen. Hier ist insbesondere nachteilig, dass überschüssiges Matrixmaterial durch die Walzen nach unten abläuft und nicht rezykliert werden kann. Zusätzlich besteht die Gefahr, dass sich Matrixmaterial auf den Walzen ablagert und auf der Walzenoberfläche aushärtet, was zu notwendigen zusätzlichen und aufwendigen Reinigungsprozessen führt.

Aufgabe der vorliegenden Erfindung war es, eine Vorrichtung zur Imprägnierung von Faserstrukturen bereitzustellen, die die aus dem Stand der Technik bekannten Nachteile nicht aufweist.

Gelöst wird die Aufgabe durch eine Vorrichtung zur Imprägnierung von Faserstrukturen mit einem Matrixmaterial gemäß Anspruch 1, umfassend ein Unterteil mit einem Bad zur Aufnahme des Matrixmaterials und einer Abtropfeinheit, wobei die Abtropfeinheit mindestens einen Abstreifer mit einer Abstreifkante umfasst, über die die getränkte Faserstruktur im Betrieb geführt wird und eine in Richtung des Bades geneigte Fläche, über die von der Faserstruktur abtropfendes Matrixmaterial in das Bad zurücklaufen kann, sowie einen Deckel, an dem eine Umlenkeinheit montiert ist, mit der die Faserstruktur bei montiertem Deckel in das Bad gedrückt wird, wobei bei montiertem Deckel zwischen dem Deckel und dem Unterteil an den Seiten, durch die die Faserstruktur in die Vorrichtung geführt wird und aus der Vorrichtung austritt, ein Spalt ausgebildet ist.

Durch das Bad mit Matrixmaterial, durch das die Faserstruktur zum Tränken geführt wird, ist es nicht notwendig, Dosiereinheiten vorzusehen, mit denen eine exakte Menge an Matrixmaterial zugeführt wird. Die Fasern nehmen das Matrixmaterial beim Durchlaufen des Bades auf und überschüssiges Matrixmaterial wird anschließend abgestreift. Hierzu ist der mindestens eine Abstreifer mit Abstreifkante vorgesehen. Das abgestreifte Matrixmaterial tropft auf die in Richtung des Bades geneigte Fläche, so dass das überschüssige und abgestreifte Matrixmaterial über die geneigte Fläche wieder zurück in das Bad läuft und so wiederverwertet werden kann.

Durch den Deckel, mit dem die Vorrichtung verschlossen wird, wird verhindert, dass ein ständiger Luftaustausch oberhalb des Bades erfolgt. Hierdurch kann zum Einen die Verdunstung des Matrixmaterials eingeschränkt werden, zum Anderen wird auch die ständige Zufuhr von frischer Luft unterbunden, so dass eine Reaktion des Matrixmaterials mit dem in der Luft enthaltenen Wasser verlangsamt wird. Das im Bad enthaltene Matrixmaterial kann somit länger genutzt werden und muss weniger oft wegen eintretender Alterung und damit einhergehender Zunahme der Viskosität ausgetauscht werden. Um zu verhindern, dass die Fasern beim Eintritt in die Vorrichtung oder beim Verlassen der Vorrichtung geschädigt werden und weiterhin zu verhindern, dass bei Verlassen der Vorrichtung das Matrixmaterial wieder aus den Fasern ausgepresst wird, ist ein Spalt zwischen Deckel und Unterteil vorgesehen, durch den die Fasern in die Vorrichtung geführt werden und ein zweiter Spalt, durch den die getränkten Fasern die Vorrichtung wieder verlassen.

Mit dem an den Deckel montierten Umlenkteil wird die Faserstruktur im Betrieb in das Matrixmaterial im Bad gedrückt. Hierdurch ist es möglich, das Bad unabhängig vom Einlegen der Fasern zu befüllen. Die Fasern können auf einfache Weise oberhalb der Oberfläche des Bades eingelegt werden und werden dann bei Montage des Deckels mit dem Umlenkteil in das Bad gedrückt. Ein umständliches Einlegen bei entleertem Bad entfällt somit.

Ein weiterer Vorteil der erfindungsgemäßen Vorrichtung ist, dass durch den Aufbau mit der Umlenkeinheit am Deckel für eine Reinigung das Unterteil auf einfache Weise entnommen und durch ein neues Unterteil ersetzt werden kann. Hierdurch sind keine langen Betriebsunterbrechungen bei einer Reinigung erforderlich. Sollte der Reinigungsaufwand zu groß sein oder nur mit umweltschädlichen Mitteln möglich sein, so dass eine Entsorgung günstiger und umweltfreundlicher durchgeführt werden kann, erlaubt es die erfindungsgemäße Vorrichtung auch, Unterteile als Einwegteile auszuführen und jeweils bei Bedarf ein Unterteil durch ein neues zu ersetzen.

Um nach dem Durchlaufen des Bades die Fasern gleichmäßig abzustreifen ist es bevorzugt, wenn zusätzlich zu dem mindestens einen Abstreifer, über den die getränkte Faserstruktur im Betrieb der Vorrichtung geführt wird, mindestens ein Abstreifer am Deckel montiert ist, der bei montiertem Deckel von oben mit einer Abstreifkante auf die getränkte Faserstruktur drückt. Mit dem mindestens einen am Deckel montierten Abstreifer wird auch das überschüssige Matrixmaterial von der Oberseite der Fasern abgestreift. Auch dieses tropft von dem Abstreifer auf die in Richtung des Bades geneigte Fläche, von der das Matrixmaterial in das Bad zurückfließt. Durch die Montage des Abstreifers am Deckel ist es auch hier möglich, die Faserstruktur auf einfache Weise in die Vorrichtung über die am Unterteil montierten Teile einzulegen. Die von oben einwirkenden Teile drücken dann entsprechend nach Montage des Deckels auf die Faserstruktur. Ein aufwendiges Einfädeln zwischen den einzelnen Abstreifern und Umlenkteilen ist nicht erforderlich.

Damit der auf die Faserstruktur wirkende Druck eingestellt werden kann ist es weiterhin bevorzugt, wenn mindestens ein am Deckel montierter Abstreifer höhenverstellbar ist. Besonders bevorzugt ist es, wenn alle am Deckel montierten Abstreifer höhenverstellbar sind. Wenn mehrere Abstreifer vorgesehen sind, die am Deckel montiert sind, ist es möglich, jeden Abstreifer individuell einzustellen. Dies ermöglicht eine Führung durch die am Unterteil und am Deckel montierten Abstreifer derart, dass eine gewünschte Menge an Matrixmaterial in der Faserstruktur verbleibt. Je größer der Abstand zwischen Abstreifkante des am Deckel montierten Abstreifers und dem Deckel ist, umso größer ist der Druck, der auf die getränkte Faserstruktur wirkt und umso mehr Matrixmaterial wird abgestreift. Wenn also eine Faserstruktur mit viel Matrixmaterial erhalten werden soll, werden die Abstreifer so eingestellt, dass ein nur geringer Druck auf die Faserstruktur wirkt, wenn stattdessen ein nur geringer Anteil an Matrixmaterial in der Faserstruktur enthalten sein soll, werden die Abstreifer so eingestellt, dass ein höherer Druck auf die Faserstruktur wirkt.

Um das Matrixmaterial gleichmäßig von der Faserstruktur abzustreifen ist es weiterhin bevorzugt, wenn dass die Abstreifer am Deckel und am Unterteil in Förderrichtung der Faserstruktur versetzt zueinander angeordnet sind. Besonders bevorzugt ist es dabei, wenn in Förderrichtung der Faserstruktur jeweils abwechselnd ein Abstreifer am Deckel und einer am Unterteil angeordnet ist. Durch eine solche Anordnung wird die Faserstruktur gleichmäßig von oben und unten an den Abstreifern entlang geführt und das Matrixmaterial abgestreift. Eine Abwechselnde Anordnung der Abstreifer am Unterteil und am Deckel führt weiterhin dazu, dass die am Deckel montierten Abstreifer jeweils zwischen den am Unterteil montierten Abstreifern kämmen. Dies hat den weiteren positiven Effekt, dass bei einer Höheneinstellung der Abstreifer am Deckel auf die Faserstruktur, die die Abstreifkante des am Deckel montierten Abstreifers passiert der gleiche Druck wirkt wie an der benachbarten Abstreifkante des am Unterteil montierten Abstreifers. Hierdurch wird eine gleichmäßige Imprägnierung der Faserstruktur erhalten.

Damit das überschüssige Matrixmaterial von der Faserstruktur abgestreift wird, ist es besonders vorteilhaft, wenn die Abstreifer am Unterteil und am Deckel jeweils so dimensioniert sind, dass die Abstreifkante der Abstreifer am Deckel tiefer ist als die Abstreifkante der Abstreifer am Unterteil der Vorrichtung. Auf diese Weise erfolgt immer ein Kämmen der am Deckel montierten Abstreifer zwischen den am Unterteil montierten Abstreifern. Durch eine Höhenverstellung der am Unterteil montierten Abstreifer und/oder der am Deckel montierten Abstreifer kann dann eingestellt werden, wie tief die Abstreifer ineinander kämmen.

Als Material für die Abstreifer eignen sich insbesondere abriebfestes Metall, abriebfester Kunststoff, abriebfeste Keramik oder Glas. Durch den Einsatz eines abriebfesten Materials wird sichergestellt, dass keine vom Abstreifer abgetragenen Partikel als Fremdstoffe in die getränkte Faserstruktur gelangen. Zudem wird hierdurch verhindert, dass sich die Abstreifkanten im Laufe des Betriebs durch Abrieb verformen. Hierdurch wird eine gleichmäßige Wirkung der Abstreifer über die gesamte Betriebsdauer erzielt. Besonders bevorzugt als Material für die Abstreifer sind Stahl, Polyethylen hoher Dichte (HDPE), Polytetrafluorethylen (PTFE), Keramik oder Glas.

Unter abriebfest wird im Rahmen der vorliegenden Erfindung verstanden, dass beim Durchlauf von 1000 km der Faserstruktur, insbesondere von Rovings, weniger als 0,1 mm des Materials des Abstreifers durch die durchlaufende Faserstruktur abgetragen werden.

Damit die Faserstruktur beim Einführen in die Vorrichtung nicht geschädigt wird und insbesondere nicht über eine Kante streift, ist es bevorzugt, wenn am Unterteil eine erste Umlenkeinheit vorgesehen ist, über die die Faserstruktur vor dem Eintritt in das Bad geführt wird. Entsprechend ist vorzugsweise eine zweite Umlenkeinheit am Unterteil vorgesehen, über die die getränkte Faserstruktur nach Verlassen des Bades geführt wird. Da die erste Umlenkeinheit und die zweite Umlenkeinheit jeweils am Unterteil vorgesehen sind, kann die Faserstruktur beim Einlegen einfach auf die Umlenkeinheiten gelegt werden. Mit der am Deckel befestigten Umlenkeinheit wird die Faserstruktur dann in das Bad gedrückt, so dass die Faserstruktur über die erste Umlenkeinheit am Unterteil, entlang der Umlenkeinheit am Deckel und über die zweite Umlenkeinheit am Unterteil zur Abtropfeinheit geführt wird. Die erste Umlenkeinheit und die zweite Umlenkeinheit am Unterteil sind dabei so platziert, dass die Umlenkeinheit am Deckel bei der Montage zwischen der ersten Umlenkeinheit am Unterteil und der zweiten Umlenkeinheit am Unterteil positioniert ist.

Um bereits beim Verlassen des Bades und vor der Abtropfeinheit überflüssiges Matrixmaterial von den Fasern zu entfernen, ist es weiterhin bevorzugt, wenn am Deckel eine Abstreifwalze montiert ist, die bei montiertem Deckel die Faserstruktur auf die zweite Umlenkeinheit drückt. Die Faserstruktur wird im Betrieb zwischen der zweiten Umlenkeinheit und der Abstreifwalze hindurchgeführt. Da die Abstreifwalze auf die Umlenkeinheit drückt, wird überschüssiges Matrixmaterial bereits an dieser Stelle aus der Faserstruktur gedrückt. Die Positionierung der zweiten Umlenkeinheit und der Abstreifwalze führt weiterhin dazu, dass das überschüssige Matrixmaterial direkt in das Bad zurückläuft.

Die erste und die zweite Umlenkeinheit können jeweils unabhängig voneinander eine Stange oder eine drehbare Rolle sein. Ebenso kann die Umlenkeinheit, mit der die Faserstruktur in das Bad gedrückt wird, mindestens einen Stab oder mindestens eine rotierende Rolle umfassen. Wenn die Umlenkeinheit eine Stange ist, so weist diese vorzugsweise nur abgerundete Kanten auf und ist besonders bevorzugt ein Rundstab. Es können für die Umlenkelemente sowohl Stangen als auch drehbare Rollen vorgesehen sein. Bevorzugt ist es jedoch, wenn zumindest die erste und die zweite Umlenkeinheit, die am Unterteil angeordnet sind entweder beide als Stange oder beide als rotierende Rolle ausgebildet sind. Besonders bevorzugt sind alle Umlenkelemente als Stange oder alle Umlenkelemente als drehbare Rolle ausgebildet.

Geeignete Materialien für die Umlenkelemente sind die gleichen wie die Materialien für die Abstreifer. Das heißt, dass die Umlenkelemente vorzugsweise aus abriebfestem Metall, abriebfestem Kunststoff, einer abriebfesten Keramik oder aus Glas gefertigt werden und besonders bevorzugt aus Stahl, HDPE, PTFE, Keramik oder Glas sind.

Um die Fasern in das Bad zu drücken kann nur ein Umlenkelement am Deckel vorgesehen sein oder es können mehrere Umlenkelemente am Deckel montiert sein. Hierbei sind alle am Deckel montierten Umlenkelemente so positioniert, dass diese zwischen dem ersten und dem zweiten Umlenkelement am Unterteil positioniert sind, wenn der Deckel geschlossen ist und wenn die Umlenkelemente am Unterteil vorhanden sind.

Damit verhindert wird, dass ein ständiger Luftaustausch durch die Spalte erfolgt, durch die die Fasern im Betrieb geführt werden und so ständig Wasser mit der Luftfeuchtigkeit zugeführt wird oder Matrixmaterial verdunstet und aus der Vorrichtung ausgetragen wird, ist es bevorzugt, wenn am Spalt, durch den die Faserstruktur in die Vorrichtung geführt wird und/oder am Spalt, durch den die Faserstruktur aus der Vorrichtung austritt eine Dichtlippe vorgesehen ist. Die Dichtlippe kann dabei aus jedem beliebigen geeigneten Material gefertigt sein, insbesondere einem Elastomermaterial, wie es üblicherweise für Dichtungen eingesetzt wird. Die Verwendung des Elastomermaterials sichert, dass sowohl die noch nicht imprägnierte Faserstruktur beim Einlass in die Vorrichtung als auch die imprägnierte Faserstruktur beim Verlassen der Vorrichtung nicht durch die Dichtlippe geschädigt werden.

Um zu verhindern, dass Matrixmaterial mit Komponenten aus der Umgebungsluft, insbesondere in der Luft enthaltenem Wasser reagieren und dabei aushärten kann, ist es weiterhin bevorzugt, wenn ein Zulauf und ein Ablauf für ein Spülgas umfasst sind. Mit dem Spülgas kann die Atmosphäre oberhalb des Matrixmaterials entfernt und durch das Spülgas ausgetauscht werden. Geeignete Spülgase sind abhängig vom eingesetzten Matrixmaterial. So wird zum Beispiel bei Matrixmaterialien, die mit Wasser reagieren ein wasserfreies Spülgas eingesetzt. Hierzu eignen sich zum Beispiel trockene Luft oder auch ein trockenes Inertgas wie Stickstoff, Kohlendioxid oder ein Edelgas. Inertgase eignen sich auch dann, wenn das Matrixmaterial mit anderen Komponenten der Luft, beispielsweise dem darin enthaltenen Sauerstoff, reagieren kann. Wenn im Unterschied dazu verhindert werden soll, dass Matrixmaterial verdunstet kann zum Beispiel ein Spülgas eingesetzt werden, das mit den Komponenten des Matrixmaterials, die verdunsten können, gesättigt ist.

Zur Herstellung eines Bauteils wird ein Verfahren eingesetzt, das folgende Schritte umfasst:
(a) Imprägnieren einer Faserstruktur mit einem Matrixmaterial in einer wie vorstehend beschriebenen Vorrichtung,
(b) Formen der getränkten Faserstruktur zu einem Bauteil.

Die zu imprägnierende Faserstruktur wird dabei vorzugsweise einem Vorrat, beispielsweise einer Rolle, auf die die Faserstruktur aufgewickelt ist, entnommen. Um die Vorrichtung zur Imprägnierung sinnvoll betreiben zu können, ist die zu imprägnierende Faserstruktur eine "Endlosstruktur", das heißt, dass die Faserstruktur im Prinzip eine unbegrenzte Länge aufweisen kann und eine endliche Länge sich lediglich aus der Notwendigkeit ergibt, dass nicht beliebig lange Faserstrukturen in dem Vorrat enthalten sein können. Vorzugsweise sind die Faserstrukturen dann so gestaltet, dass bei Erreichen des Endes einer Struktur eine nachfolgende neue Struktur auf einfache Weise mit der bisherigen Struktur verbunden werden kann, bei Einsatz von Endlosfasern als Faserstruktur zum Beispiel durch Verknoten. Faserstrukturen, die imprägniert werden können, sind zum Beispiel Vliese, Gewebe, Gestricke, Einzelfasern oder Rovings.

Bevorzugt ist es, wenn die Faserstruktur Rovings umfasst. Diese werden besonders bevorzugt nach dem Tränken in Schritt (b) in einem Nasswickelverfahren zu einem Bauteil aufgewickelt. Bauteile, die mit dem erfindungsgemäßen Verfahren so hergestellt werden können, sind zum Beispiel Rohre, Masten oder Tanks jeder beliebigen Art und Größe.

Um eine ausreichende Festigkeit des Bauteils zu erhalten ist es weiterhin bevorzugt, wenn die Faserstruktur Kohlenstofffasern, Glasfasern, Aramidfasern, synthetische Fasern, beispielsweise Polymerfasern oder Naturfasern enthält. Hierbei kann die Faserstruktur unterschiedliche Fasern enthalten. Die Auswahl der Fasern ergibt sich dabei insbesondere aus den mechanischen Anforderungen an das Bauteil. Üblich ist es jedoch, dass keine unterschiedlichen Fasern sondern nur Fasern aus einem Material eingesetzt werden. Besonders bevorzugt enthält die Faserstruktur Kohlenstofffasern, Glasfasern oder Aramidfasern.

Das Matrixmaterial, mit dem die Fasern imprägniert werden kann jedes beliebige thermoplastische Polymer sein oder Edukte zur Herstellung eines duroplastischen oder thermoplastischen Polymers enthalten, wobei die Edukte in flüssiger oder gelöster Form vorliegen müssen. Wenn das Matrixmaterial ein thermoplastisches Polymer ist, so liegt dieses zum Beispiel als Schmelze vor. Alternativ ist es jedoch auch möglich, dass das Matrixmaterial Edukte zur Herstellung des Polymers in Form einer Monomerlösung, Oligomerlösung, Monomerschmelze oder Oligomerschmelze enthält, die dann zum gewünschten Polymer reagieren. Wenn die Faserstruktur mit einem duroplastischen Polymer imprägniert werden soll, enthält das Matrixmaterial immer Edukte zur Herstellung des gewünschten duroplastischen Polymers. Zusätzlich kann das Matrixmaterial übliche Katalysatoren enthalten. Edukte zur Herstellung des Polymers sind im Allgemeinen Monomere oder Oligomere, aus denen das Polymer aufgebaut ist. Wenn ein duroplastisches Polymer hergestellt werden soll, so können die Edukte auch bereits als Polymere vorliegen, die zum Duroplasten weiterreagieren.

Zur Einstellung der Eigenschaften des Bauteils kann das Matrixmaterial zudem Additive enthalten. Hierbei handelt es sich zum Beispiel um Weichmacher, Schlagzähmodifizierer, UV-Stabilisatoren, Flammschutzmittel und beliebige andere, dem Fachmann bekannte Additive, die üblicherweise zur Modifikation von Polymeren eingesetzt werden.

Besonders bevorzugt ist das Matrixmaterial ausgewählt aus ungesättigten Polyesterharzen (UP), Vinylestern (VE), Epoxidharzen (EP) und Polyurethanen (PUR) und deren Edukten. Ausführungsbeispiele der Erfindung sind in den Figuren dargestellt und werden in der nachfolgenden Beschreibung näher erläutert.

Es zeigen:
- Figur 1: eine Prinzipdarstellung eines Nasswickelverfahrens,
- Figur 2: eine Schnittansicht einer erfindungsgemäßen Vorrichtung zur Imprägnierung einer Faserstruktur mit geöffnetem Deckel,
- Figur 3: eine Schnittansicht der Vorrichtung gemäß Figur 2 mit geschlossenem Deckel,
- Figuren 4 bis 7: Schnittansichten von unterschiedlichen Ausführungsformen einer erfindungsgemäßen Vorrichtung.

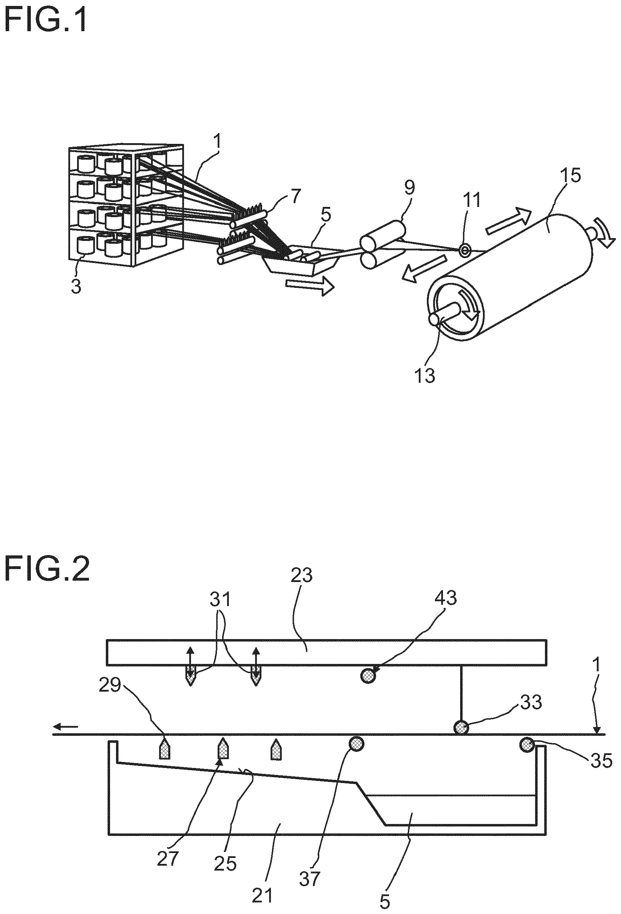

Figur 1 zeigt ein Nasswickelverfahren, bei dem die erfindungsgemäße Vorrichtung zur Imprägnierung einer Faserstruktur zum Einsatz kommen kann, in einer Prinzipdarstellung.

Zur Herstellung von Bauteilen in einem Nasswickelverfahren wird eine Faserstruktur 1, in der hier dargestellten Ausführungsform Rovings, aus einem Vorrat 3, hier einem Spulengestell, einem Bad 5 zugeführt. Vor Eintritt in das Bad 5 werden die Rovings durch Kämme 7 geleitet, in denen die Rovings voneinander getrennt werden, damit diese im Bad 5 rundum mit dem Matrixmaterial in Kontakt kommen und so gleichmäßig imprägniert werden. An das Bad 5 schließt sich ein Abstreifwalzenpaar 9 an durch das die im Bad 5 imprägnierten Rovings geführt werden. Am Abstreifwalzenpaar 9 wird überschüssiges Matrixmaterial von den imprägnierten Rovings entfernt. Abschließend werden die imprägnierten Rovings durch einen Führungsring 11 geführt und auf eine Spindel 13 gewickelt. Hierdurch wird ein rotationssymmetrisches Bauteil 15 erzeugt. Um eine gleichmäßige Wicklung des imprägnierten Rovings 1 auf der Spindel 13 zu erhalten ist der Führungsring 11 beweglich und kann, wie hier mit Pfeilen dargestellt parallel zur Achse der Spindel 11 bewegt werden.

Eine erfindungsgemäße Vorrichtung zur Imprägnierung einer Faserstruktur ist in Schnittansicht in Figur 2 dargestellt.

Eine Vorrichtung, in der die Faserstruktur 1, beispielsweise die Rovings, mit Matrixmaterial imprägniert werden können, umfasst ein Unterteil 21 und einen Deckel 23. Im Unterteil 21 befindet sich das Bad 5 mit dem Matrixmaterial, mit dem die Faserstruktur 1 getränkt werden soll. In Bewegungsrichtung der Faserstruktur 1 schließt sich an das Bad 5 eine in Richtung des Bades geneigte Fläche 25 an. Oberhalb der geneigten Fläche 25 sind am Unterteil 21 Abstreifer 27 mit jeweils einer Abstreifkante 29 angeordnet. Im laufenden Betrieb wird die Faserstruktur 1 über die Abstreifkante 29 geführt und überschüssiges Matrixmaterial von der Faserstruktur 1 entfernt. Durch die Positionierung der Abstreifer 27 oberhalb der geneigten Fläche fließt das abgestreifte Matrixmaterial zurück in das Bad 5.

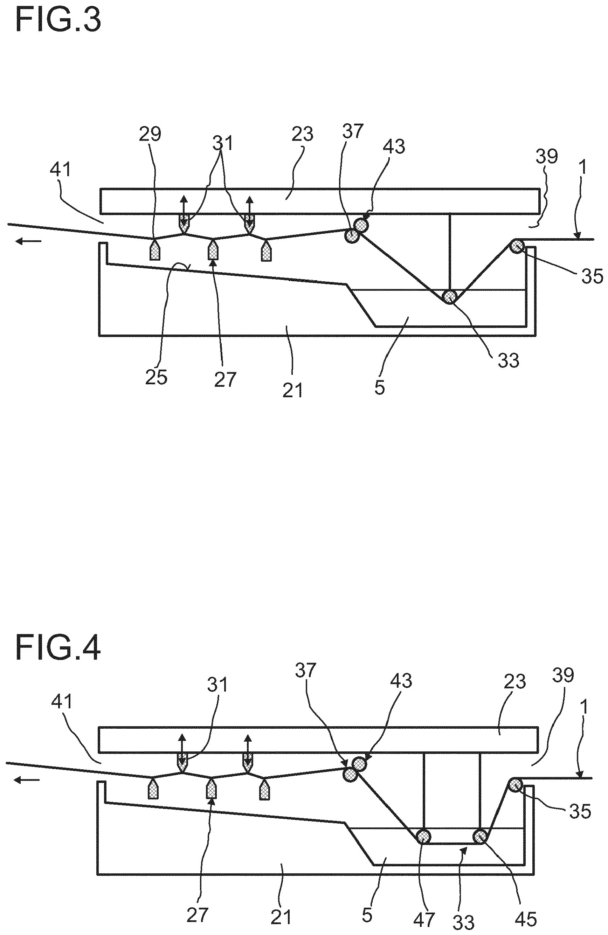

Am Deckel 23 sind Abstreifer 31 angebracht, die vorzugsweise höhenverstellbar sind. Die Abstreifer 31am Deckel 23 sind dabei vorzugsweise so positioniert, dass diese zwischen den Abstreifern 27 am Unterteil 21 kämmen. Am Deckel 23 ist weiterhin eine Umlenkeinheit 33 montiert, mit der die Faserstruktur 1 bei geschlossenem Deckel 23 in das Bad 5 gedrückt wird. Dies ist in Figur 3 dargestellt. Hier kann auch entnommen werden, dass die Abstreifer 27, die am Unterteil 21 befestigt sind, zwischen den Abstreifern 31, die am Deckel 23 montiert sind, kämmen. Hierdurch wird der Faserstruktur 1 ein leichter Zick-Zack-Verlauf aufgeprägt

Damit die Faserstruktur 1 vor Eintritt in das Bad 5 und nach dem Verlassen des Bades 5 nicht an Kanten am Unterteil geschädigt wird, sind in der hier dargestellten Ausführungsform eine erste Umlenkeinheit 35 und eine zweite Umlenkeinheit 37 am Unterteil 21 vorgesehen. Im Betrieb läuft die Faserstruktur 1 durch einen Spalt 39 zwischen Unterteil 21 und Deckel 23 in die Vorrichtung zur Imprägnierung von Fasern, wird über die erste Umlenkeinheit 35 am Unterteil 21 geführt. Anschließend läuft die Faserstruktur 1 entlang der Umlenkeinheit 33, die am Deckel 23 montiert ist und mit der die Faserstruktur 1 in das Bad 5 getaucht wird. An die Umlenkeinheit 33 schließt sich die zweite Umlenkeinheit 37 an, über die die Faserstruktur 31 geführt wird, bevor diese den Abstreifern 27, 31 zugeführt wird, an denen das überschüssige Matrixmaterial entfernt wird. Durch einen zweiten Spalt 41 verlässt die getränkte Faserstruktur dann die Vorrichtung und kann einer Weiterverarbeitung, zum Beispiel der Spindel 13 eines Nasswickelverfahrens, zugeführt werden. Alternativ zu Bauteilen, die im Nasswickelverfahren hergestellt werden, können aus der imprägnierten Faserstruktur jedoch auch beliebige andere, zum Beispiel auch flächige Bauteile hergestellt werden. Hierzu ist es zum Beispiel möglich, die getränkte Faserstruktur, insbesondere wenn es sich hierbei um ein Vlies, ein Gestrick oder ein Gewebe handelt, auf eine gewünschte Länge abzuschneiden und in einer geeigneten Form zum gewünschten Bauteil zu formen. Bevorzugt ist jedoch die Zufuhr zu einer Spindel 13 eines Nasswickelverfahrens.

Durch das Eintauchen der Faserstruktur 1 in das Bad 5 haften in der Regel große Mengen an Matrixmaterial an der Faserstruktur 1, wenn diese das Bad 5 verlässt. Um einen ersten Überschuss an Matrixmaterial zu entfernen ist es bevorzugt, wenn - wie hier dargestellt - eine Abstreifwalze 43 umfasst ist, die bei geschlossenem Deckel 23 an der zweiten Umlenkeinheit 37 anliegt. Die getränkte Faserstruktur wird dann zwischen der zweiten Umlenkeinheit 37 und der Abstreifwalze 43 hindurchgeführt.

Durch Einstellung der Höhe der am Deckel 23 montierten Abstreifer 31 kann der Druck eingestellt werden, mit dem die Abstreifer 27, 31 auf die getränkte Faserstruktur 1 wirken. Hierdurch kann gezielt eingestellt werden, wieviel Matrixmaterial die getränkte Faserstruktur 1 enthalten soll. Bei einem höheren Druck, der erzielt wird, indem die am Deckel 23 befestigten Abstreifer 31 tiefer zwischen den Abstreifern 27 am Unterteil 21 kämmen, wird mehr Matrixmaterial aus der getränkten Faserstruktur 1 gepresst, so dass diese insgesamt weniger Matrixmaterial enthält als bei einer Einstellung der Abstreifer 31 derart, dass diese weniger tief zwischen den Abstreifern 27 am Unterteil 21 kämmen und der Druck auf die Faserstruktur somit geringer ist.

Sowohl die am Deckel 23 montierte Umlenkeinheit 33 als auch die erste Umlenkeinheit 35 und die zweite Umlenkeinheit 37 am Unterteil 21 können jeweils unabhängig voneinander in Form einer Stange oder als drehbare Rolle ausgebildet sein. Wenn eine Umlenkeinheit 33, 35, 37 als Stange ausgebildet ist, so weist diese zumindest in dem Bereich, in dem ein Kontakt mit der Faserstruktur 1 erfolgt, vorzugsweise nur abgerundete Kanten auf und ist insbesondere ein Rundstab.

Die eingesetzten Abstreifer 27, 31 können jede beliebige, dem Fachmann für Abstreifer bekannte Form annehmen. Auch können die Abstreifer in einer von 90° zur Faserstruktur 1 abweichenden Richtung ausgerichtet sein. Bei der Form und Ausrichtung der Abstreifer ist nur darauf zu achten, dass hierdurch die getränkte Faserstruktur 1 nicht geschädigt wird. Die Abstreifer können dabei so gestaltet und ausgerichtet sein, wie es bereits derzeit bei Bädern zum Tränken von Faserstrukturen üblich ist.

In den Figuren 4 bis 6 sind alternative Ausführungsformen zur Gestaltung der am Deckel 23 montierten Umlenkeinheit 33 dargestellt. Der restliche Aufbau der Vorrichtung zum Imprägnieren von Faserstrukturen entspricht der der in den Figuren 2 und 3 dargestellten Ausführungsform.

Bei der in Figur 4 dargestellten Ausführungsform umfasst die Umlenkeinheit 33 eine erste am Deckel 23 montierte Umlenkeinheit 45 und eine zweite am Deckel 23 montierte Umlenkeinheit 47. Auch hier ist es möglich, dass die erste am Deckel 23 montierte Umlenkeinheit 45 und die zweite am Deckel 23 montierte Umlenkeinheit als Stange oder als drehbare Rolle ausgebildet sind. Die Position der ersten am Deckel 23 montierten Umlenkeinheit 45 und der zweiten am Deckel 23 montierten Umlenkeinheit 47 ist so dass beide Umlenkeinheiten 45, 47 bei geschlossenem Deckel 23 zwischen der ersten Umlenkeinheit 35 und der zweiten Umlenkeinheit 37 positioniert sind.

Durch die erste am Deckel 23 montierte Umlenkeinheit 45 und die zweite am Deckel 23 montierte Umlenkeinheit 47 kann die Strecke, die die Faserstruktur im Bad 5 zurücklegt verlängert und damit die Verweilzeit der Faserstruktur im Bad 5 bei gleicher Geschwindigkeit im Vergleich zu nur einer Umlenkeinheit, wie sie in den Figuren 2 und 3 dargestellt ist, erhöht werden.

Es können auch noch mehr als drehbare Rolle oder Stange ausgebildete Umlenkeinheiten am Deckel 23 vorgesehen sein, dies ist jedoch nur dann sinnvoll, wenn diese jeweils mit der Faserstruktur 1 in Kontakt sind und die Strecke, die die Faserstruktur 1 im Bad 5 zurücklegt weiter verlängert wird.

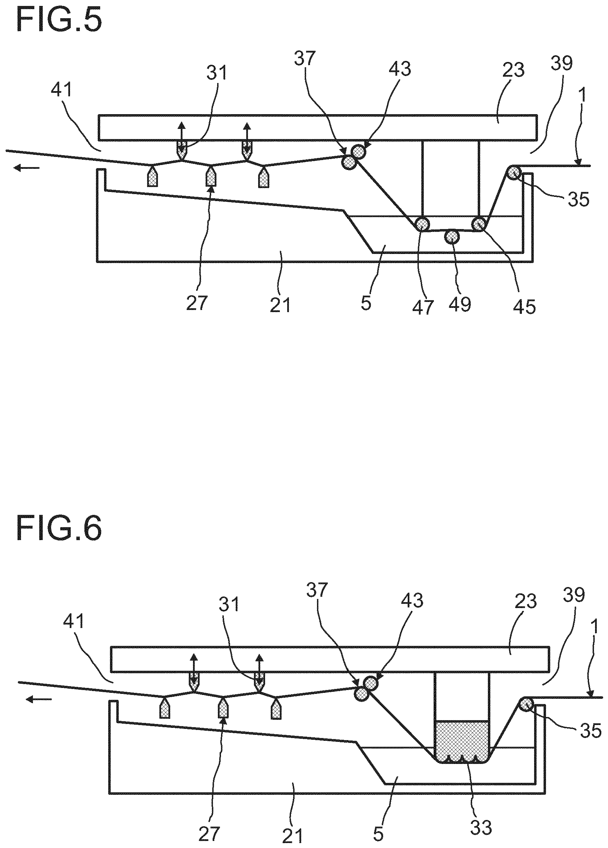

Alternativ zu weiteren Umlenkeinheiten am Deckel 23 ist es auch möglich, zur Verlängerung der Strecke im Bad 5 und gegebenenfalls zur Verbesserung der Imprägnierung eine zusätzliche Umlenkeinheit 49 im Bad 5 vorzusehen. Diese befindet sich, wie in Figur 5 dargestellt zwischen der ersten am Deckel 23 montierten Umlenkeinheit 45 und der zweiten am Deckel 23 montierten Umlenkeinheit 47. Durch die im Bad angeordnete zusätzliche Umlenkeinheit 49 wird die Faserstruktur gegen die am Deckel montierten Umlenkeinheiten 45, 47 gedrückt und erfährt gleichzeitig auch einen Druck an der zusätzlichen Umlenkeinheit 49. Hierdurch wird insbesondere dann, wenn die Faserstruktur ein Vlies, Gewebe oder Gestrick ist oder auch dann wenn mehrere Fasern zu einem Roving verbunden sind, Matrixmaterial zwischen die Fasern gedrückt und gegebenenfalls zwischen den Fasern enthaltene Gaspolster werden herausgedrückt. Hierdurch wird eine gleichmäßige und vor allem auch vollständige Imprägnierung erzielt.

Neben einzelnen Stangen oder drehbaren Rollen, wie es in den Figuren 2 bis 5 dargestellt ist, kann die Umlenkeinheit 33 auch in Form eines Stempels mit einer strukturierten Oberfläche ausgebildet sein. Dies ist beispielhaft für eine Umlenkeinheit mit einer wellenförmigen Oberfläche in Figur 6 dargestellt. Die Struktur der Oberfläche kann jedoch auch jede beliebige andere Form annehmen. Zu beachten ist nur, dass die Faserstruktur durch die Struktur der Oberfläche der als Stempel ausgebildeten Umlenkeinheit 33 nicht geschädigt wird.

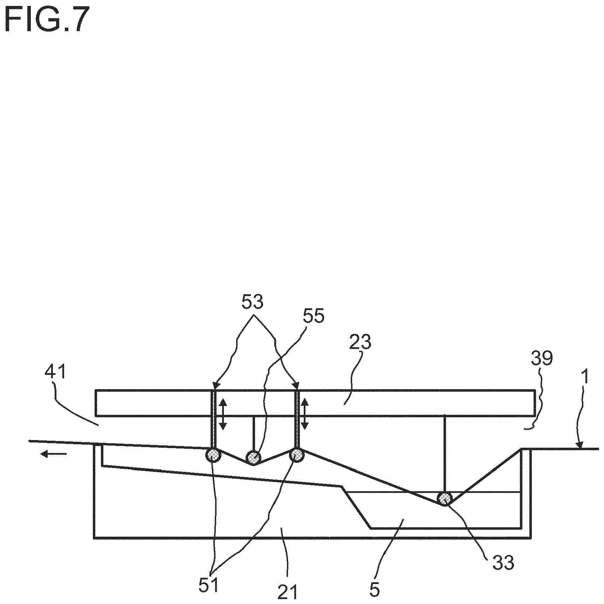

Eine Ausführungsform mit einer alternativen Gestaltung der Abtropfeinheit ist in Figur 7 dargestellt.

Im Unterschied zu den in den Figuren 2 bis 6 dargestellten Ausführungsformen ist hier die Abtropfeinheit nicht mit ineinander kämmenden Abstreifern 27, 31 gestaltet.

Bei der in Figur 7 dargestellten Ausführungsform sind in der Abtropfeinheit am Unterteil 21 Umlenkeinheiten 51, beispielsweise als Stange oder drehbare Rolle, vorgesehen und am Deckel 23 höhenverstellbare Abstreifer 53. Die Faserstruktur 1 wird zwischen den Umlenkeinheiten 51 und den Abstreifern 53 hindurchgeführt, wobei die Faserstruktur 1 mit den Umlenkeinheiten 51 gegen die Abstreifer 53 gedrückt wird. Die Abstreifer 53 können in ihrer Höhe verstellt werden, so dass diese mit einem einstellbaren Druck gegen die Umlenkeinheiten 51 gedrückt werden können. Hierdurch lässt sich die Menge an Matrixmaterial in der getränkten Faserstruktur einstellen. Zwischen den Abstreifern 53 ist eine weitere Umlenkeinheit 55 am Deckel montiert. Mit dieser wird sichergestellt, dass die Faserstruktur 1 auch dann, wenn ein Spalt zwischen Umlenkeinheit 51 und Abstreifer 53 ist, gegen die Umlenkeinheiten 51 gedrückt wird.

In allen Ausführungsformen ist es möglich, im Bereich der Spalte 39, 41, durch die die Faserstruktur in die Vorrichtung geführt wird beziehungsweise die getränkte Faserstruktur aus der Vorrichtung, Dichtelemente vorzusehen, um die Vorrichtung gegen eindringende Umgebungsluft abzudichten. Dies ist insbesondere dann vorteilhaft, wenn als Matrixmaterial ein Polymer beziehungsweise eine Polymervorläuferverbindung eingesetzt wird, die mit einem Luftbestandteil, beispielsweise in der Luft enthaltenem Wasser, chemisch reagiert. Zusätzlich können ein Zulauf und ein Ablauf für ein Spülgas vorgesehen sein, um den Gasraum oberhalb des Bades mit dem Spülgas zu spülen.

In allen hier dargestellten Ausführungsformen erlaubt die Vorrichtung zur Imprägnierung einer Faserstruktur eine einfache Inbetriebnahme. Unabhängig davon, ob bereits Matrixmaterial im Bad 5 enthalten ist oder nicht, ist es möglich, bei geöffnetem Deckel 23 die Faserstruktur 1 einfach aufzulegen. Durch die Umlenkeinheiten und Abstreifer am Deckel 23 wird die Faserstruktur gegen die entsprechenden Umlenkeinheiten und Abstreifer am Unterteil 21 und in das Bad 5 gedrückt und nimmt so den vorgesehen Weg ein. Ein kompliziertes Einfädeln der Faserstruktur oder ein Ablassen des Matrixmaterials aus dem Bad, um die Faserstruktur um eine Walze herumzulegen ist daher mit der hier beschriebenen Vorrichtung nicht erforderlich. Auf entsprechen einfache Weise kann auch beim Abschalten die Faserstruktur nach dem Öffnen des Deckels 23 wieder entnommen werden.

Zusätzlich ist es auf einfache Weise möglich, bei Bedarf durch Entnahme und Austausch des Unterteils 21 entweder ein anderes Matrixmaterial vorzulegen oder auch bei Bedarf ein Unterteil 21 zur Reinigung oder Entsorgung zu entnehmen und durch ein neues Unterteil 21 zu ersetzen. Hierdurch ist es insbesondere auch möglich, die Vorrichtung auch bei einer erforderlichen Reinigung des Bades weiter zu betreiben, indem einfach ein neues Unterteil eingesetzt wird, während das vorherige gereinigt wird.

### Bezugszeichenliste

- 1: Faserstruktur
- 3: Vorrat
- 5: Bad
- 7: Kamm
- 9: Abstreifwalzenpaar
- 11: Führungsring
- 13: Spindel
- 15: Bauteil
- 21: Unterteil
- 23: Deckel
- 25: geneigte Fläche
- 27: Abstreifer
- 29: Abstreifkante
- 31: Abstreifer
- 33: Umlenkeinheit
- 35: erste Umlenkeinheit am Unterteil 21
- 37: zweite Umlenkeinheit am Unterteil 21
- 39: Spalt
- 41: zweiter Spalt
- 43: Abstreifwalze
- 45: erste am Deckel 23 montierte Umlenkeinheit
- 47: zweite am Deckel 23 montierte Umlenkeinheit
- 49: zusätzliche Umlenkeinheit im Bad 5
- 51: Umlenkeinheit

## Patentansprüche

1. Vorrichtung zur Imprägnierung von Faserstrukturen (1) mit einem Matrixmaterial umfassend ein Unterteil (21) mit einem Bad (5) zur Aufnahme des Matrixmaterials und einer Abtropfeinheit, wobei die Abtropfeinheit mindestens einen Abstreifer (27) mit einer Abstreifkante (29) umfasst, über die die getränkte Faserstruktur (1) im Betrieb geführt wird und eine in Richtung des Bades geneigte Fläche (25), über die von der Faserstruktur (1) abtropfendes Matrixmaterial in das Bad (5) zurücklaufen kann, sowie einen Deckel (23), an dem eine Umlenkeinheit (33) montiert ist, mit der die Faserstruktur (1) bei montiertem Deckel (23) in das Bad (5) gedrückt wird, wobei bei montiertem Deckel (23) zwischen dem Deckel (23) und dem Unterteil (21) an den Seiten, durch die die Faserstruktur (1) in die Vorrichtung geführt wird und aus der Vorrichtung austritt, jeweils ein Spalt (39, 41) ausgebildet ist, wobei am Deckel (23) mindestens ein Abstreifer (31) montiert ist, der bei montiertem Deckel (23) von oben mit einer Abstreifkante auf die getränkte Faserstruktur (1) drückt, wobei vorzugsweise mindestens ein am Deckel (23) montierter Abstreifer (31) höhenverstellbar ist.

2. Vorrichtung gemäß Anspruch 1, **dadurch gekennzeichnet, dass** die Abstreifer (27, 31) am Deckel (23) und am Unterteil (21) in Förderrichtung der Faserstruktur (1) versetzt zueinander angeordnet sind, wobei vorzugsweise die Abstreifer (27, 31) am Unterteil (21) und am Deckel (23) jeweils so dimensioniert sind, dass die Abstreifkante der Abstreifer (31) am Deckel (23) tiefer ist als die Abstreifkante (29) der Abstreifer (27) am Unterteil (21) der Vorrichtung.

3. Vorrichtung gemäß Anspruch 1 oder 2, **dadurch gekennzeichnet, dass** die Abstreifer (27, 31) jeweils aus einem abriebfesten Metall, einem abriebfesten Kunststoff, Keramik oder Glas gefertigt sind.

4. Vorrichtung gemäß einem der Ansprüche 1 bis 3, **dadurch gekennzeichnet, dass** am Unterteil (21) eine erste Umlenkeinheit (35) vorgesehen ist, über die die Faserstruktur (1) vor dem Eintritt in das Bad (5) geführt wird.

5. Vorrichtung gemäß einem der Ansprüche 1 bis 4, **dadurch gekennzeichnet, dass** eine zweite Umlenkeinheit (37) am Unterteil (21) vorgesehen ist, über die die getränkte Faserstruktur (1) nach Verlassen des Bades (5) geführt wird, wobei vorzugsweise am Deckel (23) eine Abstreifwalze (43) montiert ist, die bei montiertem Deckel (23) die Faserstruktur (1) auf die zweite Umlenkeinheit (37) drückt.

6. Vorrichtung gemäß einem der Ansprüche 4 oder 5, **dadurch gekennzeichnet, dass** die erste Umlenkeinheit (35) und die zweite Umlenkeinheit (37) unabhängig voneinander jeweils eine Stange oder eine drehbare Rolle sind.

7. Vorrichtung gemäß einem der Ansprüche 4 bis 6, **dadurch gekennzeichnet, dass** die erste Umlenkeinheit (35) und die zweite Umlenkeinheit (37) jeweils unabhängig voneinander aus einem abriebfesten Metall, einem abriebfesten Kunststoff, einer Keramik oder Glas gefertigt sind.

8. Vorrichtung gemäß einem der Ansprüche 1 bis 7, **dadurch gekennzeichnet, dass** am Spalt (39), durch den die Faserstruktur (1) in die Vorrichtung geführt wird und/oder am Spalt (41), durch den die Faserstruktur (1) aus der Vorrichtung austritt eine Dichtlippe vorgesehen ist.

9. Vorrichtung gemäß einem der Ansprüche 1 bis 8, **dadurch gekennzeichnet, dass** die Umlenkeinheit (33), mit der die Faserstruktur (1) in das Bad (5) gedrückt wird, mindestens einen Stab oder mindestens eine rotierende Rolle umfasst.

10. Vorrichtung gemäß einem der Ansprüche 1 bis 9, **dadurch gekennzeichnet, dass** ein Zulauf und ein Ablauf für ein Spülgas umfasst sind.

11. Verfahren zur Herstellung eines faserverstärkten Bauteils (15), folgende Schritte umfassend:
(a) Imprägnieren einer Faserstruktur (1) mit einem Matrixmaterial in einer Vorrichtung gemäß einem der Ansprüche 1 bis 10,
(b) Formen der getränkten Faserstruktur (1) zum Bauteil (15).

12. Verfahren gemäß Anspruch 11, **dadurch gekennzeichnet, dass** die Faserstruktur (1) Rovings umfasst.

13. Verfahren gemäß Anspruch 11 oder 12, **dadurch gekennzeichnet, dass** die Faserstruktur (1) Kohlenstofffasern, Glasfasern oder Aramidfasern enthält.

14. Verfahren gemäß einem der Ansprüche 11 bis 13, **dadurch gekennzeichnet, dass** das Matrixmaterial ausgewählt ist aus ungesättigten Polyesterharzen, Vinylestern, Epoxidharzen und Polyurethanen und deren Edukten.

## Claims

1. An apparatus for impregnating fiber structures (1) with a matrix material, comprising a lower part (21) having a bath (5) for receiving the matrix material and a draining unit, the draining unit comprising at least one wiper (27) having a wiping edge (29), over which the impregnated fiber structure (1) is guided during operation, and a surface (25) inclined in the direction of the bath, by which matrix material draining from the fiber structure (1) can return into the bath (5), as well as a cover (23), on which a deflection unit (33), by which the fiber structure (1) is pressed into the bath (5) when the cover (23) is mounted, is mounted, a gap (39, 41) respectively being formed, when the cover (23) is mounted, between the cover (23) and the lower part (21) on the sides by which the fiber structure (1) is guided into the apparatus and emerges from the apparatus, at least one wiper (31), which presses from above with a wiping edge on the impregnated fiber structure (1) when the cover (23) is mounted, being mounted on the cover (23), at least one wiper (31) mounted on the cover (23) preferably being height-adjustable.

2. The apparatus according to claim 1, wherein the wipers (27, 31) on the cover (23) and on the lower part (21) are arranged offset with respect to one another in the feed direction of the fiber structure (1), the wipers (27, 31) on the lower part (21) and on the cover (23) preferably respectively being dimensioned in such a way that the wiping edge of the wipers (31) on the cover (23) is lower than the wiping edge (29) of the wipers (27) on the lower part (21) of the apparatus.

3. The apparatus according to claim 1 or 2, wherein the wipers (27, 31) are respectively made of an abrasion-resistant metal, an abrasion-resistant plastic, ceramic or glass.

4. The apparatus according to one of claims 1 to 3, wherein a first deflection unit (35), over which the fiber structure (1) is guided before entering the bath (5), is provided on the lower part (21).

5. The apparatus according to one of claims 1 to 4, wherein a second deflection unit (37), over which the impregnated fiber structure (1) is guided after leaving the bath (5), is provided on the lower part (21), a wiping roll (43), which presses the fiber structure (1) onto the second deflection unit (37) when the cover (23) is mounted, preferably being mounted on the cover (23).

6. The apparatus according to one of claims 4 and 5, wherein the first deflection unit (35) and the second deflection unit (37) are respectively independently of one another a rod or a rotatable roller.

7. The apparatus according to one of claims 4 to 6, wherein the first deflection unit (35) and the second deflection unit (37) are respectively made independently of one another from an abrasion-resistant metal, an abrasion-resistant plastic, a ceramic or glass.

8. The apparatus according to one of claims 1 to 7, wherein a sealing lip is provided at the gap (39) through which the fiber structure (1) is guided into the apparatus and/or at the gap (41) through which the fiber structure (1) emerges from the apparatus.

9. The apparatus according to one of claims 1 to 8, wherein the deflection unit (33), by which the fiber structure (1) is pressed into the bath (5), comprises at least one rod or at least one rotating roller.

10. The apparatus according to one of claims 1 to 9, wherein an inlet and an outlet for a flushing gas are provided.

11. A method for producing a fiber-reinforced component (15), comprising the following steps:
(a) impregnating a fiber structure (1) with a matrix material in an apparatus according to one of claims 1 to 10,
(b) shaping the impregnated fiber structure (1) to form the component (15).

12. The method according to claim 11, wherein the fiber structure (1) comprises rovings.

13. The method according to claim 11 or 12, wherein the fiber structure (1) contains carbon fibers, glass fibers or aramid fibers.

14. The method according to one of claims 11 to 13, wherein the matrix material is selected from unsaturated polyester resins, vinyl esters, epoxy resins and polyurethanes, and reagents thereof.

## Revendications

1. Dispositif pour imprégner des structures fibreuses (1) par un matériau de matrice, comprenant une partie inférieure (21) présentant un bain (5), destiné à recevoir le matériau de matrice, et une unité d'égouttage, l'unité d'égouttage comprenant au moins une racle (27) pourvue d'un bord de raclage (29), sur lequel la structure fibreuse (1) imprégnée est guidée lors du fonctionnement, et une surface (25) inclinée vers le bain, via laquelle le matériau de matrice qui s'égoutte de la structure fibreuse (1) peut retourner dans le bain (5), ainsi qu'un couvercle (23), sur lequel est montée unité de déviation (33) qui, lorsque le couvercle est monté (23), pousse la structure fibreuse (1) dans le bain (5), une fente (39, 41) étant à chaque fois formée, lorsque le couvercle est monté (23), entre le couvercle (23) et la partie inférieure (21) au niveau des côtés à travers lesquels la structure fibreuse (1) est guidée dans le dispositif et ressort du dispositif, au moins une racle (31) étant montée au niveau du couvercle (23), laquelle racle, lorsque le couvercle (23) est monté, pousse depuis le dessus à l'aide d'un bord de raclage sur la structure fibreuse (1) imprégnée, au moins une racle (31) montée sur le couvercle (23) étant de préférence réglable en hauteur.

2. Dispositif selon la revendication 1, **caractérisé en ce que** les racles (27, 31) sont disposées, au niveau du couvercle (23) et au niveau de la partie inférieure (21), de manière décalée l'une par rapport à l'autre dans le sens de transport de la structure fibreuse (1), les racles (27, 31) au niveau de la partie inférieure (21) et au niveau du couvercle (23) étant de préférence à chaque fois dimensionnées de manière telle que le bord de raclage des racles (31) au niveau du couvercle (23) est situé plus bas que le bord de raclage (29) des racles (27) au niveau de la partie inférieure (21) du dispositif.

3. Dispositif selon la revendication 1 ou 2, **caractérisé en ce que** les racles (27, 31) sont fabriquées à chaque fois en un métal résistant à l'abrasion, en un matériau synthétique résistant à l'abrasion, en céramique ou en verre.

4. Dispositif selon l'une quelconque des revendications 1 à 3, **caractérisé en ce qu'**une première unité de déviation (35), sur laquelle la structure fibreuse (1) est guidée avant l'entrée dans le bain (5), est prévue au niveau de la partie inférieure (21).

5. Dispositif selon l'une quelconque des revendications 1 à 4, **caractérisé en ce qu'**une deuxième unité de déviation (37), sur laquelle la structure fibreuse (1) imprégnée est guidée après avoir quitté le bain (5), est prévue au niveau de la partie inférieure (21), un cylindre de raclage (43) étant de préférence monté sur le couvercle (23), lequel cylindre pousse la structure fibreuse (1) sur la deuxième unité de déviation (37) lorsque le couvercle est monté (23).

6. Dispositif selon l'une quelconque des revendications 4 ou 5, **caractérisé en ce que** la première unité de déviation (35) et la deuxième unité de déviation (37) sont, indépendamment l'une de l'autre, à chaque fois une tige ou un rouleau rotatif.

7. Dispositif selon l'une quelconque des revendications 4 à 6, **caractérisé en ce que** la première unité de déviation (35) et la deuxième unité de déviation (37) sont fabriquées, à chaque fois indépendamment l'une de l'autre, en un métal résistant à l'abrasion, en un matériau synthétique résistant à l'abrasion, en céramique ou en verre.

8. Dispositif selon l'une quelconque des revendications 1 à 7, **caractérisé en ce qu'**une lèvre d'étanchéité est prévue au niveau de la fente (39) à travers laquelle la structure fibreuse (1) est guidée dans le dispositif et/ou au niveau de la fente (41) à travers laquelle la structure fibreuse (1) ressort du dispositif.

9. Dispositif selon l'une quelconque des revendications 1 à 8, **caractérisé en ce que** l'unité de déviation (33) qui pousse la structure fibreuse (1) dans le bain (5) comprend au moins une barre ou au moins un rouleau rotatif.

10. Dispositif selon l'une quelconque des revendications 1 à 9, **caractérisé en ce qu'**il comprend une entrée et une évacuation pour un gaz de rinçage.

11. Procédé pour la fabrication d'une pièce (15) renforcée par des fibres, comprenant les étapes suivantes :
(a) imprégnation d'une structure fibreuse (1) par un matériau de matrice dans un dispositif selon l'une quelconque des revendications 1 à 10,
(b) façonnage de la structure fibreuse (1) imprégnée en pièce (15).

12. Procédé selon la revendication 11, **caractérisé en ce que** la structure fibreuse (1) comprend des stratifils ("rovings").

13. Procédé selon la revendication 11 ou 12, **caractérisé en ce que** la structure fibreuse (1) contient des fibres de carbone, des fibres de verre ou des fibres d'aramide.

14. Procédé selon l'une quelconque des revendications 11 à 13, **caractérisé en ce que** le matériau de matrice est choisi parmi les résines de polyester insaturé, les esters de vinyle, les résines époxyde et les polyuréthanes et leurs produits de départ.
